# EUROPÄISCHE PATENTSCHRIFT

(11) **EP 1 075 984 B1**
(45) Veröffentlichungstag und Bekanntmachung des Hinweises auf die Patenterteilung: **07.05.2003**
(21) Anmeldenummer: 00115015.0
(22) Anmeldetag: 24.07.2000
(51) Int. Cl.: B60N 2/44

(54) **Gepolsterter Sitz für Fahrzeuge, insbesondere Kraftfahrzeuge**
Padded seat for vehicles particularly for automotive vehicles
Siège rembourré pour véhicules en particulier pour véhicules automobiles

(30) Priorität: 07.08.1999 DE 19937464
(43) Veröffentlichungstag der Anmeldung: 14.02.2001
(73) Patentinhaber: Volkswagen Aktiengesellschaft, 38436 Wolfsburg (DE)
(72) Erfinder: Michniacki, Matthias, Dipl.-Ing, 38440 Wolfsburg (DE); Hoge, Ralf, Dipl.-Ing., 42477 Radevormwald (DE)

(56) Entgegenhaltungen:
- EP-A- 1 050 429
- DE-A- 19 604 477
- DE-A- 19 634 370
- DE-C- 19 703 516
- DE-C- 19 805 173
- US-A- 5 902 014

## Beschreibung

Die Erfindung bezieht sich auf einen Sitz nach dem Oberbegriff des Patentanspruchs 1.

Es ist bekannt, Polstersitze in Kraftfahrzeugen zu belüften oder zu klimatisieren, um - insbesondere in der warmen Jahreszeit - den Fahrkomfort für die Insassen zu erhöhen. Zum diesbezüglichen Stand der Technik wird verwiesen auf DE 197 03 516 C1, DE 196 04 477 A1 und DE 196 34 370 A1.

Die bekannten Maßnahmen zur Belüftung bzw. Klimatisierung von Kraftfahrzeugsitzen erfordern eine Vielzahl von Einzelteilen und -elementen, woraus - nachteiligerweise - ein entsprechender Montage- und Kostenaufwand resultiert. Auch eine Funktionsprüfung oder - eventuell erforderliche - Reparaturen an der Belüftungs- bzw. Klimati-siereinrichtung sind aufwendig und verursachen deshalb entsprechende Kosten.

Aufgabe der vorliegenden Erfindung ist es, die Belüftung und/oder Klimatisierung von gepolsterten Fahrzeugsitzen einfacher handhabbar und kostengünstiger zu gestalten.

Gemäß der Erfindung wird die Aufgabe bei einem Sitz der eingangs bezeichneten Gattung durch die kennzeichnenden Merkmale des Patentanspruchs 1 gelöst.

Vorteilhafte Weiterbildungen des Grundgedankens der Erfindung enthalten die Patentansprüche 2 - 17.

Durch die Erfindung wird eine (aktive) modulare Belüftungs- und (ggf) Klimatisierungseinheit für Fahrzeugsitze geschaffen, die sich durch eine leichte, raum-sparende und kostengünstige Bauweise auszeichnet, ohne großen Aufwand ein- und ausbaubar ist und somit auch einfache Funktionskontrollen sowie (eventuelle) Reparaturen ermöglicht.

Darüber hinaus werden im einzelnen folgende Vorteile erzielt:
- Funktionsintegrierte Bauteile
- Kompakte Lösung (wenig Einzelteile)
- Austauschbarkeit
- Einfache Variantensteuerung (Lehnenabdeckung mit oder ohne Belüftungs-Klimatisierungseinheit).

Die Erfindung ist in der Zeichnung an Hand eines Ausführungsbeispiels veranschaulicht, das nachstehend detailliert beschrieben ist. Es zeigt (jeweils teilweise dargestellt und schematisch):
- Fig. 1: eine Ausführungsform einer Kraftfahrzeug-Sitzlehne, in Seitenansicht, und
- Fig. 2: die Sitzlehne nach Fig. 1, in Pfeilrichtung A betrachtet (Lehnenrahmen und Polsterauflage weggelassen).

Es bezeichnet 10 einen Lehnenrahmen mit Polsterauflage 11. Rückseitig ist der Lehnenrahmen 10 durch eine Lehnenabdeckung 12 verkleidet. Innenseitig der Lehnenabdeckung 12 und mit dieser zu einer modularen Baueinheit verbunden ist eine Kühleinheit 13, zum Beispiel ein Peltierelement, angeordnet. Wesentlicher Bestandteil der Kühleinheit 13 ist ein mit 14 bezifferter Ventilator. Kühleinheit 13 und Ventilator 14 bilden eine Belüftungs- und Klimati-siereinrichtung für die Polsterung 11 der (teilweise dargestellten) Sitzlehne.

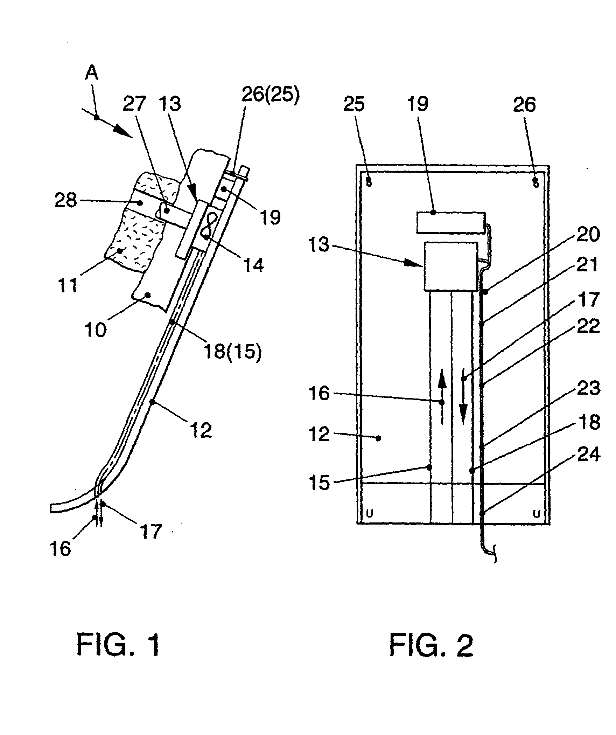

Zur Versorgung der Kühleinheit 13 saugt der Ventilator 14 Außenluft durch einen Zuluftkanal 15 in Pfeilrichtung 16 an (siehe insbesondere Fig 2). Zur Ableitung der - durch die Kühleinheit 13 erwärmten - Abluft (Pfeilrichtung 17) dient ein Abluftkanal 18, der unmittelbar neben dem Zuluftkanal 15 und parallel zu diesem angeordnet ist. Zu- und Abluftkanal 15, 18 sind, wie Fig. 1 erkennen läßt, an der (dem Lehnenrahmen 10 zugewandten) Innenseite der Lehnenabdeckung 12 angeordnet und mit dieser verbunden, vorzugsweise verklipst.

Die Zu- und Abluftkanäle 15, 18 können durch Anwendung des Warmformverfahrens individuell auf das Lehnenverkleidungsteil (Lehnenabdeckung 12) aufgebracht werden. Das bedeutet, daß die Ein- und Austritte (Pfeile 16, 17) der Zu- und Abluftkanäle 15,18 nach Bedarf, zum Beispiel Design- und/oder Komfortgegebenheiten folgend, verlegt werden können.

Die Abdichtung der Zu- und Abluftkanäle 15, 18 zum Anschluß am Ventilator 14 erfolgt zweckmäßigerweise durch Dichtungen, die einen Druck- und Toleranzausgleich ermöglichen. Hierfür sind - vorzugsweise - Schaumdichtungen geeignet.

Zur Steuerung der Kühleinheit 13 bzw. des Ventilators 14 dient ein Steuergerät 19 mit einem elektrischen Kabelstrang 20 (siehe insbesondere Fig. 2). Der Kabelstrang 20 ist - bei 21, 22, 23 und 24 - mit der Lehnenabdeckung 12 verklipst. Ebenso ist auch das Steuergerät 19 mit der Lehnenabdeckung 12 verbunden.

Zur modularen Baueinheit Lehnenabdeckung 12 / Kühl- und Belüftungseinrichtung 13, 14 gehören somit auch die Teile 15, 18, 19 und 20. Die (lösbare) Verbindung der modularen Baueinheit 12 - 15, 18 - 20 mit dem Lehnenrahmen 10 erfolgt durch Verklipsung oder Verschraubung. Zwei Befestigungspunkte sind in der Zeichnung angedeutet und mit 25, 26 bezeichnet.

Wie des weiteren aus Fig. 1 hervorgeht, besitzt die Kühl- und Belüftungseinrichtung 13, 14 einen luftführenden Anschlußstutzen 27, der in der Polsterung 11 angeordnet ist bzw. diese in einer Ausnehmung 28 durchsetzt. Der Anschlußstutzen 27 führt vom Ventilator 14 bzw. von der Kühleinheit 13 zu einer (nicht dargestellten) luftdurchflutbaren Ventilationsschicht der Polsterung 11, von wo die Kühlluft zu einem (ebenfalls nicht gezeigten) luftdurchlässigen Bezug der Polsterung 11 gelangt.

Nach einer anderen möglichen Variante kann die Kühlluft unmittelbar in das Lehnenpolster 11 eingeleitet werden, welches in diesem Fall aus luftdurchlässigem Material bestehen muß. Bei dieser Variante ist es erforderlich, die Lehnenabdeckung 12 zusätzlich mit einer Abdichtung (nicht gezeigt) zwischen Lehnenabdeckung 12 und Lehnenrahmen 10 zu versehen.

## Patentansprüche

1. Gepolsterter Sitz für Fahrzeuge, insbesondere Kraftfahrzeuge, mit einer der Polsterung (11) zugeordneten Belüftungseinrichtung (13, 14) auf Basis eines oder mehrerer Ventilatoren (14), wobei Luft angesaugt wird, die - unmittelbar oder mittelbar über eine Kühleinheit (13) - zur Belüftung bzw. Klimatisierung der Polsterung (11) dient, **dadurch gekennzeichnet, daß** die der Sitzlehne zugeordnete Belüftungseinrichtung (13, 14) zwischen der Lehnenpolsterung (11) und einer rückwärtigen Lehnenabdeckung (12) angeordnet ist und zusammen mit der Lehnenabdeckung (12) eine modulare Baueinheit bildet.

2. Gepolsterter Sitz nach Anspruch 1 mit einem die Lehnenpolsterung (11) aufnehmenden Lehnenrahmen (10), **dadurch gekennzeichnet, daß** die Baueinheit Lehnenabdeckung / Belüftungseinrichtung (12, 13, 14) mit dem Lehnenrahmen (10) lösbar verbunden ist.

3. Gepolsterter Sitz nach Anspruch 2, **dadurch gekennzeichnet, daß** die Baueinheit Lehnenabdeckung / Belüftungseinrichtung (12, 13, 14) mit dem Lehnenrahmen (10) von innen verklipst ist

4. Gepolsterter Sitz nach Anspruch 2, **dadurch gekennzeichnet, daß** die Baueinheit Lehnenabdeckung / Belüftungseinrichtung (12, 13, 14) mit dem Lehnenrahmen (12) von innen verschraubt ist.

5. Gepolsterter Sitz nach einem oder mehreren der vorstehenden Ansprüche, **dadurch gekennzeichnet, daß** in der Lehnenpolsterung (11) ein luftführender Anschlußstutzen (27) angeordnet ist, der vom Luftaustritt des Ventilators (14) bzw. der Kühleinheit (13) zu einer luftdurchflutbaren Ventilationsschicht führt, von wo die Luft zu einem - luftdurchlässig ausgebildeten - Bezug der Lehnenpolsterung (11) gelangen kann.

6. Gepolsterter Sitz nach Anspruch 5, **dadurch gekennzeichnet, daß** als luftdurchflutbare Ventilationsschicht ein Abstandsgewirke dient.

7. Gepolsterter Sitz nach einem oder mehreren der Ansprüche 1 - 4 und 6, **dadurch gekennzeichnet, daß** die vom Ventilator (14) bzw. von der Kühleinheit (13) geförderte Luft unmittelbar in das - zu diesem Zweck insgesamt luftdurchlässig ausgebildete - Lehnenpolster (11) und von dort zum luftdurchlässigen Polsterbezug gelangt.

8. Gepolsterter Sitz nach Anspruch 7, **dadurch gekennzeichnet, daß** die Lehnenabdekkung (12) gegenüber dem Lehnenrahmen (10) abgedichtet ist.

9. Gepolsterter Sitz nach einem oder mehreren der vorstehenden Ansprüche, **dadurch gekennzeichnet, daß** die Baueinheit Lehnenabdeckung / Belüftungseinrichtung (12, 14) einen oder mehrere Ventilator(en) (14) aufweist, die an Zuluftkanäle (15) angeschlossen sind, welche ebenfalls in die Baueinheit Lehnenabdeckung / Belüftungseinrichtung (12, 14) integriert sind.

10. Gepolsterter Sitz nach einem oder mehreren der Ansprüche 1 bis 8, **dadurch gekennzeichnet, daß** die Baueinheit Lehnenabdeckung / Belüftungseinrichtung (12, 13) ein oder mehrere Kühlelement(e) (13) enthält und daß das (die) Kühlelement(e) (13) an Abluftkanäle (18) angeschlossen ist (sind), die ebenfalls in die Baueinheit Lehnenabdeckung / Belüftungseinrichtung (12, 13) integriert sind.

11. Gepolsterter Sitz nach Anspruch 9 oder 10, **dadurch gekennzeichnet, daß** die Zu- und Abluftkanäle (15, 18) parallel zueinander und im wesentlichen auch zu der durch die Sitzlehne (10, 11, 12) gebildeten Ebene und nebeneinander angeordnet sind und daß die Zu- und Abluftkanäle (15, 18) von unten nach oben bzw. von oben nach unten verlaufen, derart, daß - jeweils am unteren Ende der Lehnenabdeckung (12) - die Zuluft in den Zuluftkanal (15) gelangt (Pfeil 16) und die Abluft aus dem Abluftkanal (18) austritt (Pfeil 17).

12. Gepolsterter Sitz nach Anspruch 9,10 oder 11 **dadurch gekennzeichnet, daß** die Zuund Abluftkanäle (15, 18) auf der Innenseite der Lehnenabdeckung (12) angeordnet und mit dieser verbunden sind.

13. Gepolsterter Sitz nach Anspruch 9, **dadurch gekennzeichnet, daß** die Zuluftkanäle (15) zum jeweiligen Anschluß am Ventilator (14) mittels einen Druck- und Toleranzausgleich ermöglichender Dichtungen, vorzugsweise Schaumdichtungen, abgedichtet sind.

14. Gepolsterter Sitz nach einem oder mehreren der vorstehenden Ansprüche, mit einem Steuergerät (19) für das Kühlelement (13) bzw. die Belüftungseinrichtung (13, 14), **dadurch gekennzeichnet, daß** das Steuergerät (19), inclusive einer hierfür vorgesehenen elektrischen Verkabelung (20), auf der Innenseite der Lehnenabdeckung (12) angeordnet und fixiert ist, derart, daß es einen integrierten Bestandteil der Baueinheit Lehnenabdekkung / Belüftungseinrichtung (12, 13, 14) bildet.

15. Gepolsterter Sitz nach einem oder mehreren der vorstehenden Ansprüche, **dadurch gekennzeichnet, daß** der (die) Ventilator(en) (14) zwecks Geräusch- und Vibrationseliminierung von der Lehnenabdeckung (12) entkoppelt ist (sind).

16. Gepolsterter Sitz nach Anspruch 15, **dadurch gekennzeichnet, daß** eine Eigenentkoppelung des Ventilators (der Ventilatoren) (14) vorgesehen ist.

17. Gepolsterter Sitz nach Anspruch 15, **dadurch gekennzeichnet, daß** der (die) Ventilator(en) (14) mittels Entkoppelungselementen, die am Übergangsbereich zwischen Ventilator(en) (14) und Lehnenabdeckung (12) angeordnet sind, von der Lehnenabdeckung (12) abgekoppelt ist (sind).

## Claims

1. Upholstered seat for vehicles, in particular motor vehicles, having a ventilation device (13, 14), which is assigned to the upholstery (11) and is based on one or more fans (14) with air being sucked in, the air serving - directly or indirectly via a cooling unit (13) - for ventilating or air conditioning the upholstery (11), **characterized in that** the ventilation device (13, 14), which is assigned to the backrest, is arranged between the backrest upholstery (11) and a rear backrest cover (12) and forms a modular constructional unit together with the backrest cover (12).

2. Upholstered seat according to Claim 1 having a backrest frame (10) holding the backrest upholstery (11), **characterized in that** the constructional unit of backrest cover/ventilation device (12, 13, 14) is connected releasably to the backrest frame (10).

3. Upholstered seat according to Claim 2, **characterized in that** the constructional unit of backrest cover/ventilation device (12, 13, 14) is clipped from the inside to the backrest frame (10).

4. Upholstered seat according to Claim 2, **characterized in that** the constructional unit of backrest cover/ventilation device (12, 13, 14) is screwed from the inside to the backrest frame (10).

5. Upholstered seat according to one or more of the preceding claims, **characterized in that** an air-conducting connecting branch (27) is arranged in the backrest upholstery (11), the said connecting branch leading from the air outlet of the fan (14) or the cooling unit (13) to a ventilation layer through which air can flow and from which the air can pass to a covering - of air-permeable design - of the backrest upholstery (11).

6. Upholstered seat according to Claim 5, **characterized in that** a spacer knit is used as the ventilation layer through which air can flow.

7. Upholstered seat according to one or more of Claims 1-4 and 6, **characterized in that** the air which is conveyed by the fan (14) or by the cooling unit (13) passes directly into the backrest upholstery (11) - which, for this purpose, is of air-permeable design in its entirety - and from there to the air-permeable upholstery covering.

8. Upholstered seat according to Claim 7, **characterized in that** the backrest cover (12) is sealed off from the backrest frame (10).

9. Upholstered seat according to one or more of the preceding Claims, **characterized in that** the constructional unit of backrest cover/ventilation device (12, 14) has one or more fans (14) which are connected to air inlet ducts (15) which are likewise integrated in the constructional unit of backrest covers/ventilation device (12, 14).

10. Upholstered seat according to one or more of Claims 1 to 8, **characterized in that** the constructional unit of backrest cover/ventilation device (12, 13) contains one or more cooling elements (13), and **in that** the cooling element(s) (13) is (are) connected to outlet air ducts (18) which are likewise integrated in the constructional unit of backrest cover/ventilation device (12, 13).

11. Upholstered seat according to Claim 9 or 10, **characterized in that** the inlet air and outlet air ducts (15, 18) are arranged parallel to one another and essentially also to the plane formed by the backrest (10, 11, 12) and are arranged next to one another, and **in that** the inlet air and outlet air ducts (15, 18) run from the bottom upwards or from the top downwards in such a manner that - in each case at the lower end of the backrest cover (12) - the incoming air passes into the inlet air duct (15) (arrow 16) and the outgoing air emerges from outlet air duct (18) (arrow 17).

12. Upholstered seat according to Claim 9, 10 or 11, **characterized in that** the inlet air and outlet air ducts (15, 18) are arranged on the inside of the backrest cover (12) and are connected to the latter.

13. Upholstered seat according to Claim 9, **characterized in that** the inlet air ducts (15) are sealed off with respect to the respective connection on the fan (14) by means of seals, preferably foam seals, permitting equalization of pressure and compensation for tolerances.

14. Upholstered seat according to one or more of the preceding claims, having a control unit (19) for the cooling element (13) and the ventilation device (13, 14), **characterized in that** the control unit (19), including electric cabling (20) provided for this purpose, is arranged and fixed on the inside of the backrest cover (12) in such a manner that it forms an integrated component of the constructional unit of backrest cover/ventilation device (12, 13, 14).

15. Upholstered seat according to one or more of the preceding claims, **characterized in that** the fan(s) (14) is (are) isolated from the backrest cover (12) for the purpose of eliminating noise and vibration.

16. Upholstered seat according to Claim 15, **characterized in that** an inherent isolation of the fan (of the fans) (14) is provided.

17. Upholstered seat according to Claim 15, **characterized in that** the fan(s) (14) is (are) decoupled from the backrest cover (12) by means of isolating elements which are arranged at the transitional region between fan(s) (14) and backrest cover (12).

## Revendications

1. Siège rembourré pour véhicules, en particulier pour véhicules automobiles, comprenant un dispositif d'aérage (13, 14) associé au rembourrage (11) à base d'un ou de plusieurs ventilateurs (14), dans lequel de l'air est aspiré et sert à ventiler ou à climatiser le rembourrage (11) directement ou indirectement par le biais d'une unité de refroidissement (13), **caractérisé en ce que** le dispositif d'aération (13, 14) associé au dossier du siège est disposé entre le rembourrage du dossier (11) et un recouvrement arrière du dossier (12) et forme conjointement avec le recouvrement du dossier (12) une unité modulaire.

2. Siège rembourré selon la revendication 1, comprenant un cadre de dossier (10) recevant le rembourrage (11) du dossier, **caractérisé en ce que** l'unité du recouvrement de dossier/dispositif d'aération (12, 13, 14) est reliée de manière détachable au cadre de dossier (10).

3. Siège rembourré selon la revendication 2, **caractérisé en ce que** l'unité du recouvrement de dossier/dispositif d'aération (12, 13, 14) est fixée par enclipsage à l'intérieur au cadre de dossier (10).

4. Siège rembourré selon la revendication 2, **caractérisé en ce que** l'unité du recouvrement de dossier/dispositif d'aération (12, 13, 14) est vissée au cadre de dossier (10) par l'intérieur.

5. Siège rembourré selon une ou plusieurs des revendications précédentes, **caractérisé en ce qu**'un raccord (27) guidant l'air est disposé dans le rembourrage du dossier (11), lequel conduit depuis la sortie d'air du ventilateur (14) ou de l'unité de refroidissement (13) à une couche de ventilation pouvant être traversée par l'air, de laquelle l'air peut aller jusqu'à un revêtement du rembourrage du dossier (11) réalisé de manière perméable à l'air.

6. Siège rembourré selon la revendication 5, **caractérisé en ce qu'**un tissu d'espacement sert de couche de ventilation pouvant être traversée par l'air.

7. Siège rembourré selon l'une quelconque des revendications 1 à 4 et 6, **caractérisé en ce que** l'air refoulé par le ventilateur (14) ou par l'unité de refroidissement (13) parvient directement dans le coussin du dossier (11) réalisé à cet effet dans son ensemble de manière perméable à l'air, et de là au revêtement de coussin perméable à l'air.

8. Siège rembourré selon la revendication 7, **caractérisé en ce que** le recouvrement du dossier (12) est rendu étanche par rapport au cadre de dossier (10).

9. Siège rembourré selon l'une ou plusieurs des revendications précédentes, **caractérisé en ce que** l'unité du recouvrement de dossier/dispositif d'aération (12, 14) présente un ou plusieurs ventilateur(s) (14), qui sont raccordés à des conduits d'alimentation en air (15) qui sont également intégrés dans l'unité de recouvrement de dossier/dispositif d'aération (12, 14).

10. Siège rembourré selon l'une ou plusieurs des revendications 1 à 8, **caractérisé en ce que** l'unité de recouvrement de dossier/dispositif d'aération (12, 13) contient un ou plusieurs élément(s) de refroidissement (13) et **en ce que** le ou les élément (s) de refroidissement (13) est (sont) raccordé(s) aux conduits d'évacuation d'air (18), qui sont également intégrés dans l'unité de recouvrement de dossier/dispositif d'aération (12, 13).

11. Siège rembourré selon la revendication 9 ou 10, **caractérisé en ce que** les conduits d'alimentation en air et d'évacuation d'air (15, 18) sont disposés parallèlement les uns aux autres et essentiellement aussi au plan formé par le dossier du siège (10, 11, 12) et sont disposés les uns à côté des autres et **en ce que** les conduits d'alimentation en air et d'évacuation d'air (15, 18) s'étendent de bas en haut ou de haut en bas de telle sorte que l'air entrant, à chaque fois à l'extrémité inférieure du recouvrement du dossier (12), parvienne dans le conduit d'alimentation en air (15) (flèche 16) et que l'air d'évacuation sorte hors du conduit d'évacuation d'air (18) (flèche 17).

12. Siège rembourré selon la revendication 9, 10 ou 11, **caractérisé en ce que** les conduits d'alimentation en air et d'évacuation d'air (15, 18) sont disposés du côté intérieur du recouvrement du dossier (12) et lui sont raccordés.

13. Siège rembourré selon la revendication 9, **caractérisé en ce que** les conduits d'alimentation en air (15) sont rendus étanches par rapport au raccordement respectif au ventilateur (14) au moyen de joints permettant une compensation de la pression et des tolérances, de préférence des joints en mousse.

14. Siège rembourré selon une ou plusieurs des revendications précédentes, comprenant un appareil de commande (19) pour l'élément de refroidissement (13) ou le dispositif d'aération (13, 14), **caractérisé en ce que** l'appareil de commande (19), y compris un câblage électrique (20) prévu à cet effet, est disposé et fixé du côté intérieur du recouvrement de dossier (12) de telle sorte qu'il forme un composant intégré de l'unité du recouvrement de dossier/dispositif d'aération (12, 13, 14).

15. Siège rembourré selon l'une ou plusieurs des revendications précédentes, **caractérisé en ce que** le ou les ventilateur(s) (14) est (sont) désaccouplés du recouvrement de dossier (12) dans un but d'élimination des bruits et des vibrations.

16. Siège rembourré selon la revendication 15, **caractérisé en ce qu'**il est prévu un désaccouplement du ventilateur (des ventilateurs) (14).

17. Siège rembourré selon la revendication 15, **caractérisé en ce que** le (les) ventilateur(s) (14) est (sont) désaccouplé(s) du recouvrement de dossier (12) au moyen d'éléments de désaccouplement qui sont disposés sur la zone de transition entre le (les) ventilateur(s) (14) et le recouvrement de dossier (12).
